Europäisches Patentamt

European Patent Office

Office européen des brevets

(19)

(11) Publication number: **0 247 627**
**A2**

(12) **EUROPEAN PATENT APPLICATION**

(21) Application number: **87107831.7**

(51) Int. Cl.⁴: **H04N 17/04**

(22) Date of filing: **29.05.87**

(30) Priority: **29.05.86 JP 122342/86**

(43) Date of publication of application:
**02.12.87 Bulletin  87/49**

(84) Designated Contracting States:
**DE FR GB**

(71) Applicant: **HITACHI, LTD.**
**6, Kanda Surugadai 4-chome**
**Chiyoda-ku Tokyo 101(JP)**

(72) Inventor: **Mochizuki, Jun**
**Top Sakuragaoka 3-206 11-8,**
**Fukuda-3-chome**
**Yamato-shi(JP)**
Inventor: **Hata, Seiji**
**20-10, Jonan-1-chome**
**Fujisawa-shi(JP)**
Inventor: **Takahashi, Michio**
**88-13, Mutsukawa-2-chome Minami-ku**
**Yokohama-shi(JP)**
Inventor: **Asano, Toshio**
**262-32-2-104, Kamigocho Sakae-ku**
**Yokohama(JP)**
Inventor: **Kato, Katutoshi**
**2433, Nasecho Tosuka-ku**
**Yokohama(JP)**

(74) Representative: **Patentanwälte Beetz sen. -**
**Beetz jun. Timpe - Siegfried -**
**Schmitt-Fumian**
**Steinsdorfstrasse 10**
**D-8000 München 22(DE)**

(54) **Misconvergence amount measuring apparatus.**

(57) Disclosed is a misconvergence amount measuring apparatus comprising: display means (15) for displaying a cross hatch pattern on a color display tube to be measured; image pickup means (14) for enlarging a scene of the color display tube to be measured on which a cross hatch pattern is displayed by the display means and for picking up an image of the enlarged scene of the color display tube; a picture input circuit (5) having an analog-to-digital converter for converting an image signal of the scene having the cross hatch pattern for every color picked up by the image pickup means (14) into a digital image signal; a picture memory (6) for storing picture data formed on the basis of the image signal for every color obtained from the picture input circuit; a program memory (3) storing a program; an arithmetic circuit (4) for taking in the picture data for every color from the picture memory so as to parallely execute a cumulative arithmetic processing of the picture data and an inner product arithmetic processing between the picture data and a picture address;
calculation means (1) for designating a region where a supply is transferred from the picture memory to the arithmetic circuit to thereby set a first window, and for executing a calculation in the first window to divide a result of the inner product arithmetic processing between the picture data and the picture address obtained from the arithmetic circuit by a result of the cumulative arithmetic processing of the picture data obtained from the arithmetic circuit to thereby obtain a barycenter of the cross hatch pattern for every color, and for measuring a displacement of the obtained barycenter of the cross hatch pattern for every color to thereby measure an amount of misconvergence; and a bus line (8) for connecting the picture input circuit, the picture memory, the program memory, the arithmetic circuit, and the calculation circuit to each other.

FIG. 2

# MISCONVERGENCE AMOUNT MEASURING APPARATUS

## BACKGROUND OF THE INVENTION

The present invention relates to a technique of automatically measuring picture quality of color display having phosphor of dot arrangement or the like, and particularly to an apparatus for measuring an amount of misconvergence at a high speed.

A method of measuring an amount of misconvergence is discussed, for example, in the paper by Uno and three others "Automatic Adjustment for CRT Picture Quarity", Toshiba Review, Vol. 36, No. 3, 1981, pp. 241-244.

Conventionally, an amount of misconvergence has been measured in such a manner that respective picture of three colors, that is, red, green and blue colors (hereinafter referred to as "R", "G" and "B" respectively), are measured, and the measured values are subject to processed in a software manner by a microcomputer to calculate the barycenters of the respective color pictures to thereby obtain the amount of misconvergence.

In the picture barycenter calculation through software processing by a microcomputer, there is such a problem that the more the data to be processed the longer the time to be taken for the processing, and if the number of data to be processed is decreased in order to shorten the processing time, the accuracy deteriorates.

The development of picture processing techniques by means of a computer in recent years increases a demand for high definition color displays. In makers of high definition color displays, it is necessary to measure an amount of misconvergence to thereby adjust color displacement in order to improve the quality of products and to lower the cost. In a high definition display, there is a problem that the number of data to be processed is very large and therefore it takes a very long time if the picture barycenters are calculated through software processing in a microcomputer.

## SUMMARY OF THE INVENTION

It is therefore an object of the present invention to provide a misconvergence amount measuring apparatus in which an amount of misconvergence can be measured at a high speed with no deterioration of accuracy in measurement.

In order to attain the above object, according to an aspect of the present invention, the misconvergence amount measuring apparatus comprises: display means for displaying a cross hatch pattern on a color display tube; image pickup means such as a TV camera or the like for enlarging a part of a scene of the color display tube to be measured on which a cross hatch pattern is displayed by the display means and for picking up an image of the part of the enlarged close-up scene of the color display tube; a picture input circuit having an analog-to-digital conversion means for converting an image signal of the scene having the cross hatch pattern for every color picked up by the image pickup means into a digital image signal; a picture memory for storing picture data formed on the basis of the image signal for every color obtained from the picture input circuit; an arithmetic circuit for taking in the picture data for every color from the picture memory so as to parallelly execute a cumulative arithmetic processing of the picture data and an inner product arithmetic processing between the picture data and a picture address; and calculation means for designating a region where a supply is transferred from the picture memory to the operation circuit to thereby set a for first window, and for executing a calculation in the first window to divide a result of the inner product arithmetic processing between the picture data and the picture address obtained from the arithmetic circuit by a result of the cumulative arithmetic processing of the picture data obtained from the arithmetic circuit to thereby obtain a barycenter of the cross hatch pattern for every color, and for measuring a displacement of the obtained barycenter of the cross hatch pattern for every color to thereby measure an amount of misconvergence; whereby an amount of misconvergence can be measured at a high speed with high accuracy.

Preferably, in the misconvergence amount measuring apparatus, the calculation circuit includes window setting means for setting a second window at an end portion of the scene stored in the picture memory so that the cumulative arithmetic processing of the picture data and the inner product arithmetic processing between the picture data and the picture address are executed within the second window by the arithmetic circuit so as to obtain barycenters with respect to vertical and horizontal lines of the cross hatch pattern to thereby set the first window on the basis of the obtained barycenters.

Preferably, in the misconvergence amount measuring apparatus, the calculation circuit includes a pedestal, level measuring means for setting a third window at a corner portion of the scene stored in the picture memory so that the cumulative arithmetic processing of the picture data is executed within the third window by the arithmetic circuit to thereby calculate brightness at a portion having no cross hatch pattern to measure a pedestal level.

Preferably, the misconvergence amount measuring apparatus further comprises a DMA controller for executing supply and transfer of the picture data from the picture memory to the arithmetic circuit, separately from the calculating means.

## BRIEF DESCRIPTION OF THE DRAWINGS

Fig. 1 is a circuit diagram of an embodiment of the misconvergence amount measuring apparatus according to the present invention;

Fig. 2 is a diagram showing the arrangement of the automatic display-quality measuring system;

Fig. 3 is a diagram for explaining the arithmetic timing of apparatus shown in Fig. 1;

Fig. 4 is a diagram for explaining an example of the algorithm for measuring an amount of misconvergence;

Fig. 5 is a flowchart showing the algorithm for measuring an amount of misconvergence;

Fig. 6 is a diagram showing a structure of a picture memory;

Fig. 7 is a flowchart for executing calculation of a horizontal position of the barycenter;

Fig. 8 is a flowchart for executing calculation of a vertical position of the barycenter;

Fig. 9 is a diagram for explaining the pedestal level measurement;

Fig. 10 is a flowchart for executing the pedestal level measurement;

Figs. 11, 12 and 13 are diagrams for explaining the automatic setting of processing windows;

Fig. 14 is a flowchart for executing the automatic setting of processing windows;

Fig. 15 is a diagram for explaining the calculation of the position of the barycenter of a cross hatch signal; and

Fig. 16 is a flowchart for executing the calculation of the position of the barycenter of a cross hatch signal.

## DESCRIPTION OF THE PREFERRED EMBODIMENT

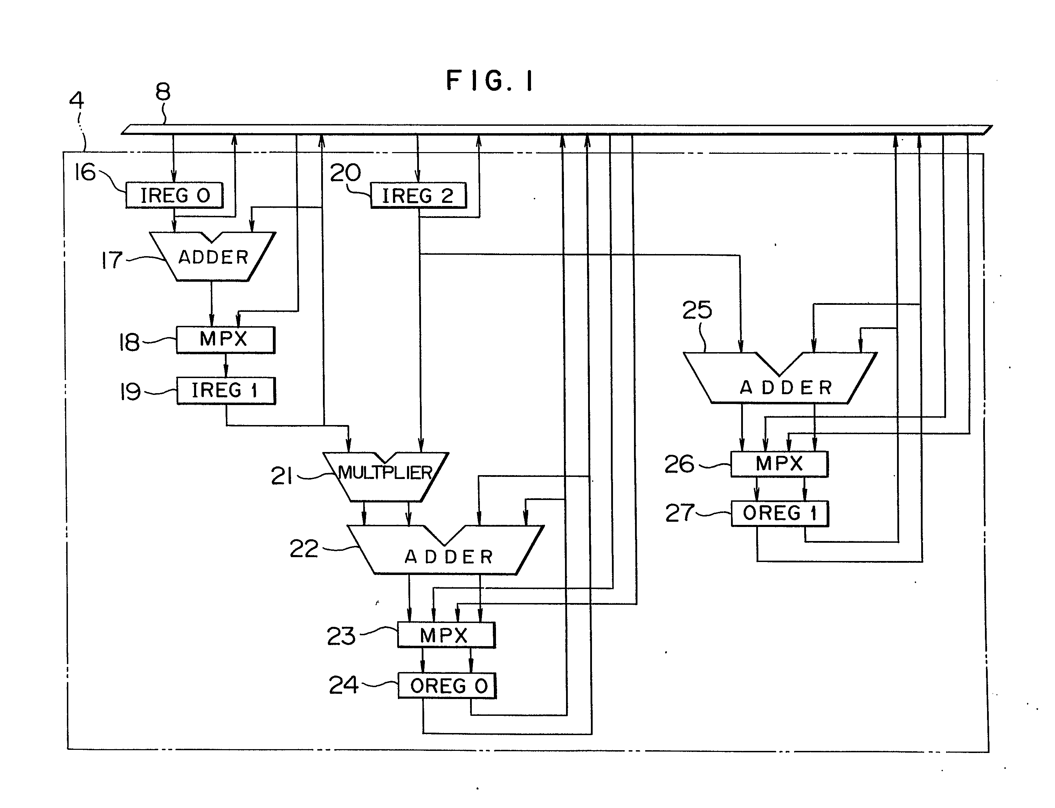

Referring to Figs. 1 to 16, an embodiment of the misconvergence amount measuring apparatus according to the present invention will be described hereunder.

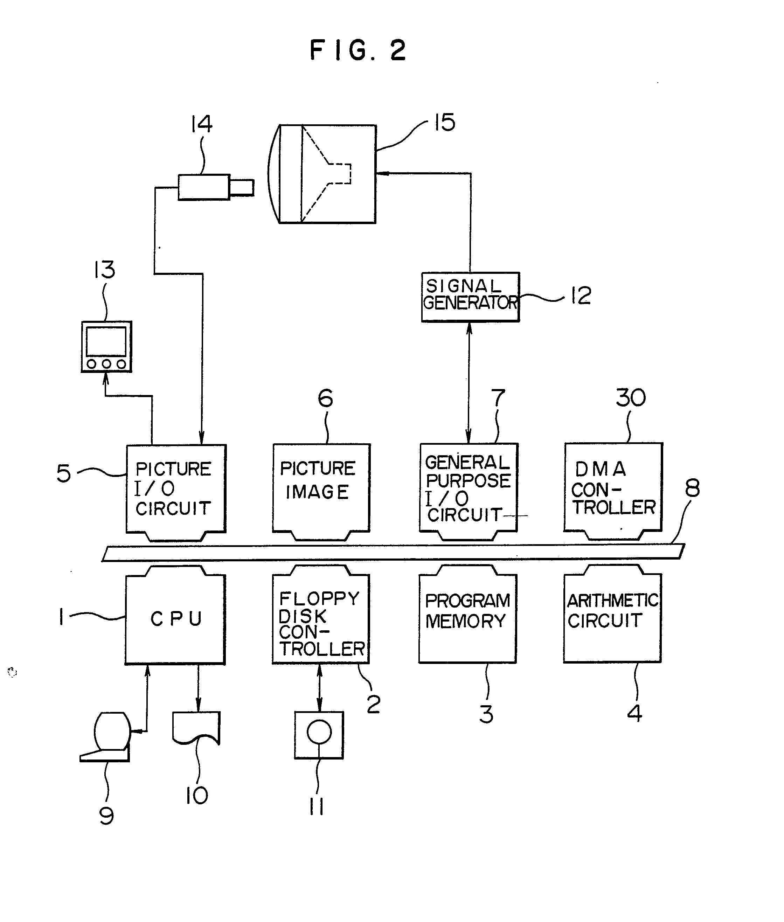

Fig. 2 is a block diagram showing an example of a display picture automatically measuring system. In this system, a central processing unit (CPU) 1, a floppy disk controller 2, a program memory 3, a misconvergence amount arithmetic processing or measurement circuit 4, a picture input/output circuit 5, a picture memory 6, a general purpose input/output circuit 7, and a direct memory access (DMA) controller 30, are connected to each other through a system bus 8. The CPU 1 is connected to a cathode ray tube (CRT) 9 for displaying results of enter/start of a program, or a result of measurement of misconvergence amount, and to a printer 10 for outputting the results of measurement. A floppy disk 11 for storing a program is connected to the floppy disk controller 2. The program memory 3 is provided for temporarily storing a program or data to be executed by the CPU 1.

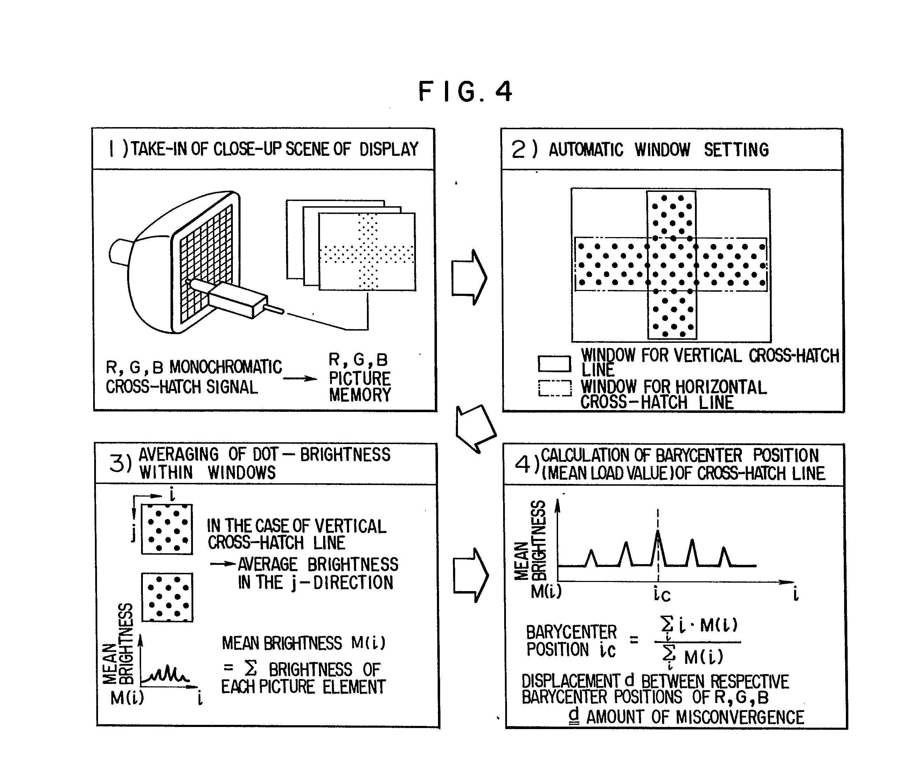

A signal generator 12 is made to generate a signal for causing a display tube 15 to be measured to display a cross hatch pattern as shown in Fig. 4. The signal generator 12 is program-controlled by the CPU 1 through the general purpose input/output circuit 7. An enlarged close-up part of a cross hatch pattern displayed on the display tube 15 to be measured as shwon in Fig. 4 is taken up by a camera 14, and an image signal from the camera 14 is taken into the picture input/output circuit 5. The taken-in image signal is 512 sampled in the picture input/output circuit 5 for every scanning line on the basis of a horizontal synchronizing signal so as to be converted it into a digital image signal M (i, j) which is in turn written into the address (i, j) of the picture memory 6. Further, in the picture input/output circuit 5, the picture data is read out of the picture memory 6 so as to be converted into a luminance signal which is in turn displayed on a monitor 13

The CPU 1 transfers the picture data M (i, j) written in the picture memory 6 corresponding to the address (i, j) to the misconvergence amount arithmetic processing circuit (hereinafter simply referred to as the "arithmetic circuit") 4 by using the DMA controller 30 to thereby analyze a misconvergence amount in such a manner as described later.

Fig. 1 is a block diagram showing the arithmetic circuit 4 in detail. In this embodiment, the width of a data base is shown with a 16-bit unit. The arithmetic circuit 4 is provided with: a 16-bit adder 17; a 16-bit multiplier 21; 32-bit adders 22 and 25; 16-bit input registers 16, 19 and 20 (hereinafter referred to also as IREGs 0, 1 and 2 respectively); and 32-bit output registers 24 and 27 (hereinafter referred to also as OREGs 0 and 1 respectively). The registers 16, 19, 20, 24 and 27 are read/written by the CPU 1 of Fig. 2 through the system bus 8. To this end, multiplexers (MPXs) 18, 23 and 26 for selecting a data path are provided in the pre-stages of the input register 19, and the output registers 24 and 27, respectively. The following three kinds of arithmetic processing are performed in the thus arranged arithmetic circuit 4.

(1) Inner Product Arithmetic Processing (by the multiplier 21 and the adder 22):

$(OREG\text{-}0)_{t\text{-}1} + (IREG\text{-}2)_t \times (IREG\text{-}1)_t \rightarrow (OREG\text{-}0)_t$

(2) Cumulation Arithmetic Processing (executed by the adder 25):

$(OREG\text{-}1)_{t\text{-}1} + (IREG\text{-}2)_t \rightarrow (OREG\text{-}1)_t$

(3) Address Arithmetic Processing (executed by the adder 17):

$(IREG\text{-}1)_{t\text{-}1} + (IREG\text{-}0)_t \rightarrow (IREG\text{-}1)_t$

In each of the expressions, $(\ )_t$ and $(\ )_{t\text{-}1}$ represent the contents of the registers shown in parentheses, and subscripts "t" and "t-1" represent a certain sampling point in time $\underline{t}$ and a preceding sampling point in time one sampling time before $\underline{t}$, respectively. The 16-bit adder 17 is used to execute the address arithmetic processing, the 16-bit multiplier 21 and the 32-bit adder 22 are used to execute the inner product arithmetic processing, and the 32-bit adder 25 is used to execute the cumulation arithmetic processing.

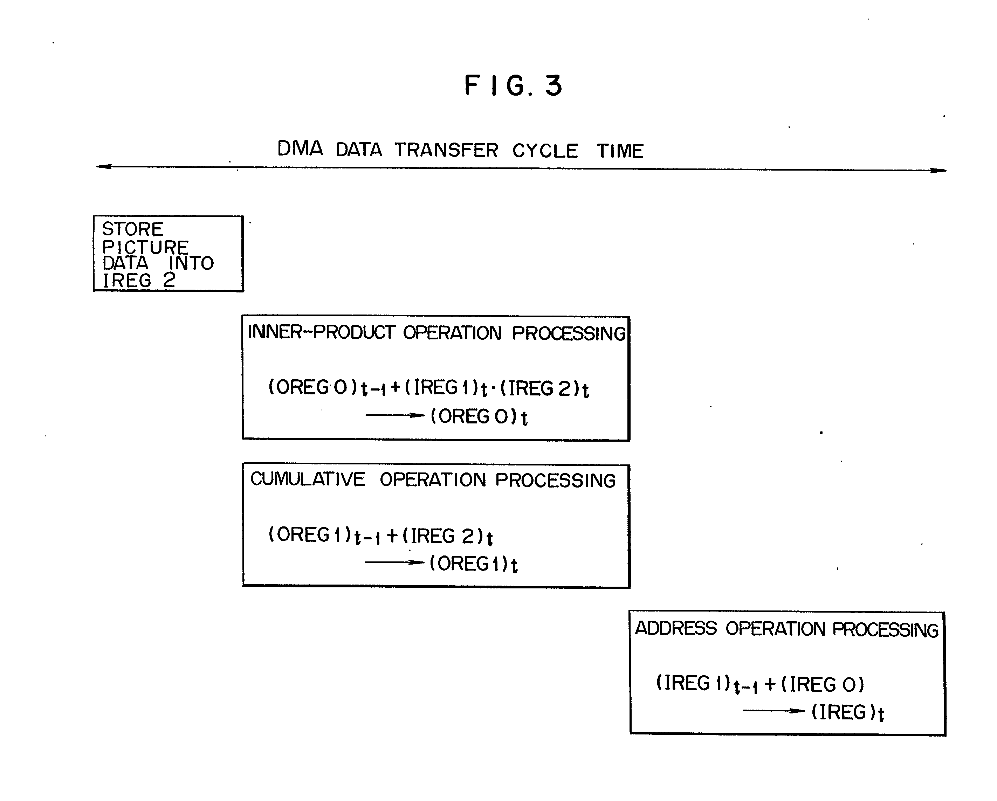

Referring to Fig. 3, the operation of the arithmetic circuit 4 will be described. The foregoing arithmetic processing is started by writing data into the IREG-2 20. Although the data are not always necessary to be picture data, picture data are treated by way of example in this embodiment, and therefore hereinafter the data are called "picture data". When picture data having a certain address have been stored into the IREG-2 20, the foregoing inner product arithmetic processing by the multiplier 21 and the adder 22 and the foregoing cumulation arithmetic processing by the adder 25 are parallelly executed. As soon as those arithmetic operations are completed, the address arithmetic processing by the adder 17 is executed. The cycle time for DMA data transfer as shown in Fig. 3, in which the picture data are transferred from the picture memory 6 to the IREG-2 20 of the arithmetic circuit 4 through the DMA controller 30, is the time taken for executing the foregoing three kinds of arithmetic operations.

Referring to Fig. 4, description will be made as to the misconvergence amount measuring algorithm in this embodiment. The following items (1) through (4) correspond to the diagrams (1) through (4) in Fig. 4 respectively.

(1) Taking-in of Display Close-up Scene:

In accordance with instructions from the CPU 1, a color designation signal for successively generating a monochromatic cross hatch pattern for each of R, G and B on a scene of the display tube 15 is produced by the general purpose input/output circuit 7, and the monochromatic cross hatch pattern for each of R, G and B is successively generated on the scene of the display tube 15 by the signal generator 12 on the basis of the color designation signal applied from the general purpose input/output circuit 7. By the monochromatic camera 14, a part of the scene of the display tube 15 having the monochromatic cross hatch pattern for each of R, G and B successively generated thereon, is successively close-up enlarged and raster-scanned so as to be successively produced as an image signal.

The image signal with respect to the partial scene having the monochromatic cross hatch pattern for each of R, G and B is successively sampled by the picture input/output circuit 5 on the basis of a horizontal synchronizing signal so as to be converted into a digital image signal, and the thus obtained digital image signal m (i, j) with respect to the partial scene is successively taken into the picture memory 6 corresponding to the address (i, j) in accordance with the instructions from the CPU 1.

In the case where a color camera is used as the camera 14, the operation may be performed in such a manner that the image is subject to color separation with three colors, R, G and B, in this color camera so that digital image signals for the colors are stored in the picture memory 6. In this embodiment, however, description will be made as to the case where a monochromatic camera is used as the camera 14.

(2) Automatic Window Setting:

The CPU 1 automatically sets windows on the basis of the results of operation of the arithmetic circuit 4 and a program stored in the program memory 3, so that the windows include horizontal and vertical cross hatch lines within an enlarged close-up scene except the intersecting region between cross hatch patterns as shown in the diagram (2) of Fig. 4. Barycenters with respect to the horizontal and vertical cross hatch lines included within the windows are calculated by the processing described in the items (3) et seq.

The algorithm of automatic window setting which is executed by the arithmetic circuit 4 in accordance with the instructions from the CPU 1 will be described in detail later.

(3) Addition (Averaging) of Dot Brightness within Window:

Referring to the diagram (3) of Fig. 4, description will be made as to the addition processing with respect to a vertical cross hatch line by way of example. The horizontal and vertical directions in an enlarged close-up scene are represented by $i$ and $j$ respectively. In the case of a vertical cross hatch line, the values of brightness of dots in a window are added to each other in the $j$-direction and averaged. That is, addition is made on the vertical cross hatch line in the $j$-direction. The foregoing processing is performed in such a manner that in accordance with the instructions from the CPU 1, the DMA controller 30 is actuated to cause the arithmetic circuit 4 to take in data from the picture memory 6 so as to perform an arithmetic operation

$$\sum_{j=1}^{N}$$

m (i, j), in the j-direction.

(4) Calculation of Position of Barycenter (Weighted Average Value) of Cross Hatch Line:

Calculation is made as to a barycenter position $i_c$ of a distribution of the mean brightness M (i) obtained through the processing of the item (3). The term "misconvergence amount" is defined as a displacement between horizontal/vertical barycenters of cross hatch signals for respective R, G and B colors. The processing of the items (3) and (4) is executed by the arithmetic circuit 4 in accordance with the instructions from the CPU 1 in the same manner as the automatic window setting. The foregoing processing of the items (3) and (4) will be described later in detail.

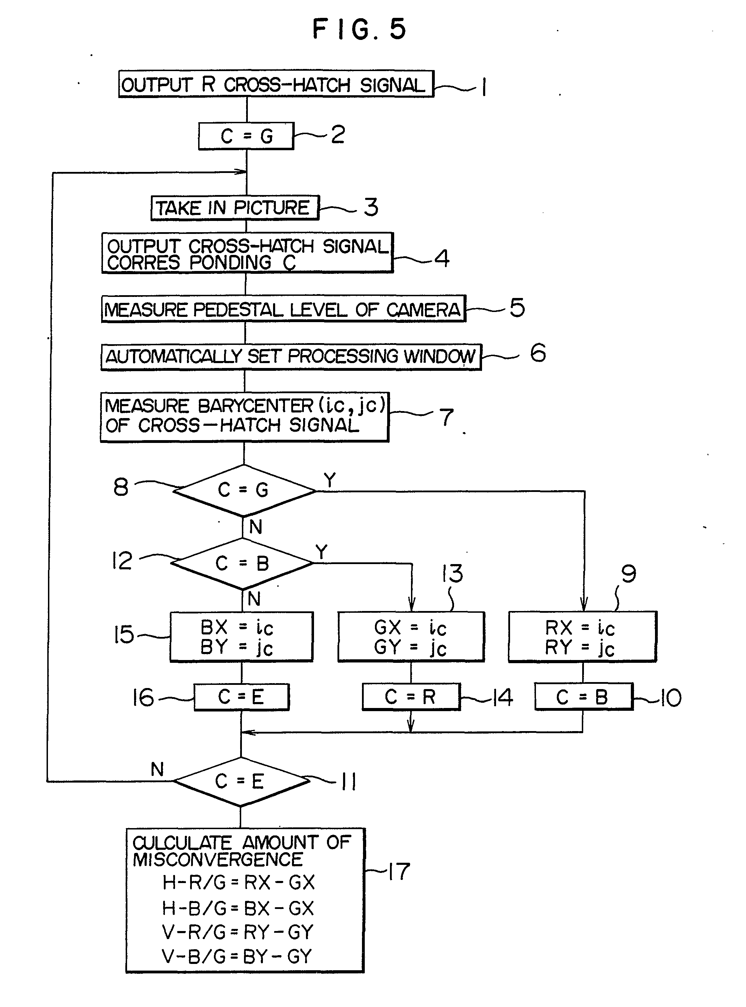

Fig. 5 is a flowchart for executing the misconvergence amount measuring algorithm of Fig. 4.

First, the general purpose input/output circuit 7 is actuated in accordance with the instructions from the CPU 1 to cause the signal generator 12 to apply a cross hatch signal for R (red) to the display tube 15 to thereby generate a cross hatch pattern for R on a scene of the display tube 15 (in the step 1).

In the CPU 1, a variable C is switched to G (green) (in the step 2).

A part of an image having the cross hatch pattern for R is close-up enlarged and raster-scanned by the camera 14 so as to obtain an image signal which is in turn transferred from the camera 14 to the picture input/output circuit 5. This image signal is converted into the digital image signal in the picture input/output circuit 5, and the thus obtained digital signal is taken into the picture memory 6 (in the step 3).

Next, the general purpose input/output circuit 7 is actuated in accordance with the instructions from the CPU 1 to cause the signal generator 12 to output a cross hatch signal for G corresponding to the variable C into the display tube 15 (in the step 4).

On the other hand, the DMA controller 30 is actuated in accordance with the instructions from the CPU 1 to transfer the picture data having the cross hatch pattern for R from the picture memory 6 to the arithmetic circuit 4 so as to measure a pedestal level of the camera 14 by using the arithmetic circuit 4, the result of measurement being stored in the program memory 3 (in the step 5).

Next, the arithmetic circuit 4 is caused by the CPU 1 to set a processing window taking the thus measured pedestal level into consideration, the window being stored into the program memory 3 (in the step 6).

Further, the arithmetic circuit 4 is actuated by the CPU 1 to arithmetically operate a position $(i_c, j_c)$ of a barycenter of the cross hatch pattern for R in consideration of the measured pedestal level and on the basis of the set processing window, the result of measurement being stored into the program memory 3 (in the step 7).

The processing in those steps 5, 6 and 7 will be described leter in detail.

Upon completion of the arithmetic processing in the step 7, the operation is advanced from the step 8 to the step 9 because C = G at present. In the step 9, the barycenter $(i_c, j_c)$ obtained in the step 7 is determined as that of the cross hatch pattern for R. The variable C is made to be B (blue) (in the step 10), and the operation is returned to the step 3 on the basis of the result of judgement in the step 11.

The picture taken in through the processing in the step 3 at present is the picture having the cross hatch pattern for G which is the same as that produced through the processing in the step 4 in the preceding. Then, the operation is advanced from the step 4 to the steps 5, 6 and 7, and further advanced from the step 8 to the steps 12 and 13. In the step 13, the barycenter obtained in the step 7 is determined as that of the cross hatch pattern for G. The variable C is made to be R (in the step 14), and the operation is returned from the step 11 to the step 3 again.

The picture taken in through processing in the step 3 at present is the same as that having the cross hatch pattern for B set by the processing in the preceding step 4. Then, the operation is advanced from the step 4 to the steps 5, 6, 7, 8, 12 and 15. The barycenter obtained in the step 7 is determined as that of a cross hatch pattern for B (in the step 15), and the variable C is made to be E (end) (in the step 16). The operation is advanced from the step 11 to the step 17. Those arithmetic operations as described above are mainly executed by the arithmetic circuit 4.

In the step 17, a misconvergence amount is calculated by the CPU 1 on the basis of the respective barycenters of the cross hatch patterns for R, G and B which have been set in the steps 9, 13 and 15 and stored in the program memory 3. The term "misconvergence amount" is defined as a displacement between the horizontal and vertical barycenters of the cross hatch patterns for R and B on the basis of the barycenter of the cross hatch pattern for G, that is, H - R/G and H - B/G as well as V - R/G and V - B/G.

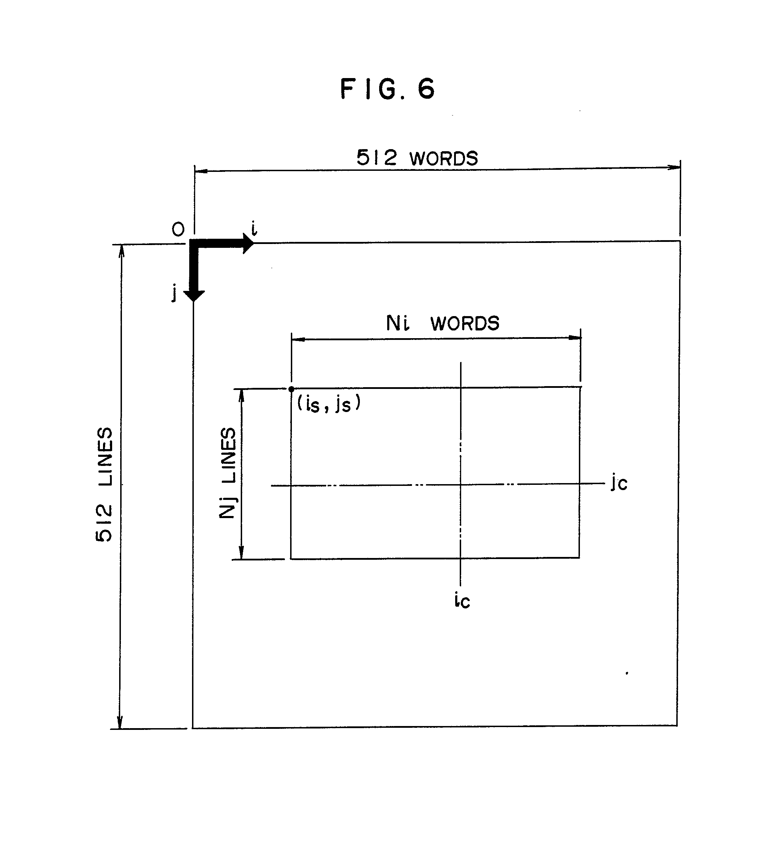

Next, referring to Figs. 6 to 8, description will be made as to the arithmetic processing in the foregoing misconvergence amount measuring algorithm by using the arithmetic circuit 4 according to the present invention.

In Fig. 6, a picture memory has a 16-bit arrangement for every picture element and has a size of 512x512 of picture elements. The bit arrangement for every picture element and the size may be desirably selected because the objects of the present invention are not influenced by those factors. In the foregoing example, an actual address of a picture element (i, j) can be obtained from the following expression:

An actual address of picture element $(i = 0, j = 0) + 1024j + 2i$. That is, picture data are stored by the use of 16 bits for every picture element, and an address is given for every 8 bits. Therefore, the number of the addresses with respect to one raster is $512 \times 2 = 1024$.

Next, description will be made as to the method of calculating the horizontal and vertical barycenters $i_c$ and $j_c$ within a window having a size of $(N_i X N_j)$ as shown in Fig. 6. A scene address of a picture element at the left upper corner in the window $(N_i X N_j)$ is represented by $(i_s, j_s)$.

First, the horizontal barycenter $i_c$ is obtained on the basis of the following expression (1).

$$i_c = \frac{\sum_{j=0}^{N_j-1} \left\{ \sum_{i=0}^{N_i-1} i \cdot m(i, j) \right\}}{\sum_{j=0}^{N_j-1} \left\{ \sum_{i=0}^{N_i-1} m(i, j) \right\}} + i_s \qquad \ldots (1)$$

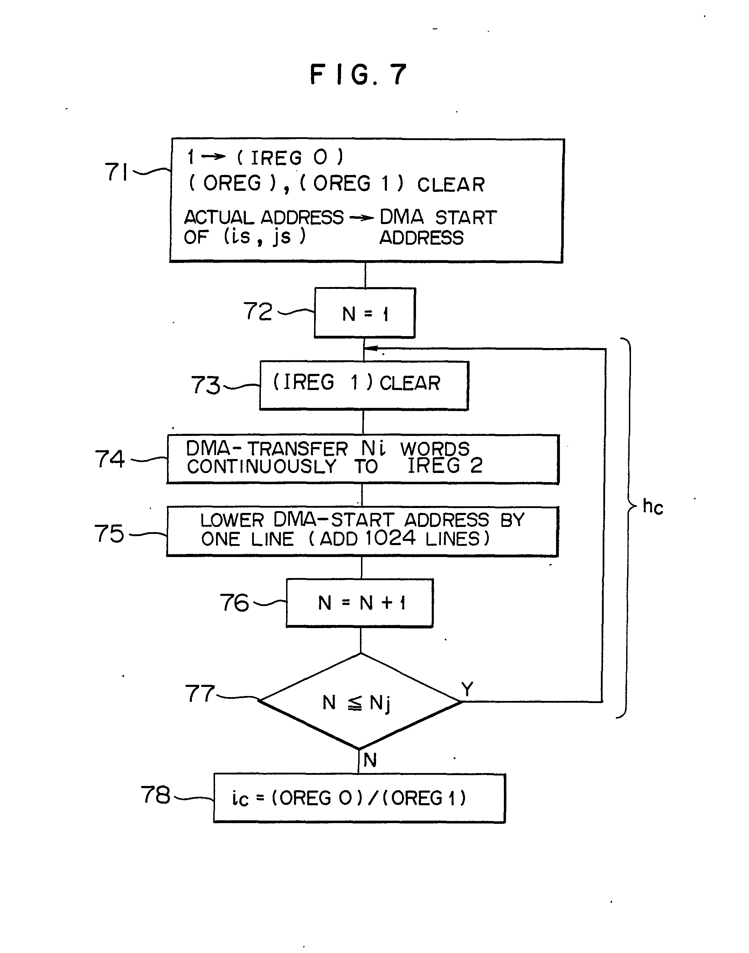

where m (i, j) represents the brightness of a picture element (i, j), that is, picture data. Fig. 7 is a flowchart showing a procedure for obtaining the horizontal barycenter $i_c$. First, as described above, in accordance with an instruction from the CPU 1, "1" is entered into the IREG-0 16, the OREG-0 24 and the OREG-1 27 are cleared through the MPXs 23 and 26 respectively, a DMA start address to be read out of the picture memory 6 is made to be an actual address of the picture element ($i_s$, $j_s$) (in the step 71). Then, after $N = 1$ (in the step 72), the IREG-1 19 is cleared (in the step 73). Picture data are transferred by $N_i$ words in succession from the picture memory 6 to the IREG-2 20 by the DMA controller 30 (in the step 74), the DMA start address is lowered by one line (in the step 75), and the value of N is increased by one (in the step 76). Next, judgement is made as to whether the value of N is not larger than $N_j$ (in the step 77), and if the judgement proves that $N \leq N_j$, the operation is returned to the step 73. If the judgement proves that $N > N_j$, on the contrary, the data transfer by the DMA controller 30 is ended by the instructions from the CPU 1. Then, the CPU 1 operates to divide the contents stored in the OREG-0 24 by those stored in the OREG-1 27 to thereby obtain the barycenter $i_c$. Thus, the contents in the respective parentheses { } in the denominator as well as in the numerator of the foregoing expression (1) can be obtained by performing the DMA transfer operation once. The routine from the step 73 to the step 77 is represented by $h_c$ (ma, w, b, $l$), ma representing an actual address of ($i_s$, $j_s$); w, the number $N_i$ of words to be DMA-transferred; b, the number $N_j$ of lines to be DMA-transferred; and $l$, the product obtained by multiplying a line interval to be transferred by 1024. In this embodiment, the picture memory is constituted by 512 words in the horizontal direction, and therefore if the DMA start address is lowered by one line, an actual address is increased by 1024. The flowchart of Fig. 7 shows the case where $l = 1024$.

Next, the vertical barycenter $j_c$ is obtained through the following expression (2).

$$j_c = \frac{\sum\limits_{i=0}^{N_i-1} \{ \sum\limits_{j=0}^{N_j-1} j \cdot m(i, j) \}}{\sum\limits_{i=0}^{N_i-1} \{ \sum\limits_{j=0}^{N_j-1} m(i, j) \}} + j_s \qquad \ldots \ (2)$$

The expression (2) is transformed into the following expression (3) suitable for the processing by the arithmetic circuit 4.

$$j_c = \frac{\sum\limits_{j=0}^{N_j-1} \{ \sum\limits_{i=0}^{N_i-1} j \cdot m(i, j) \}}{\sum\limits_{j=0}^{N_j-1} \{ \sum\limits_{i=0}^{N_i-1} m(i, j) \}} + j_s \qquad \ldots \ (3)$$

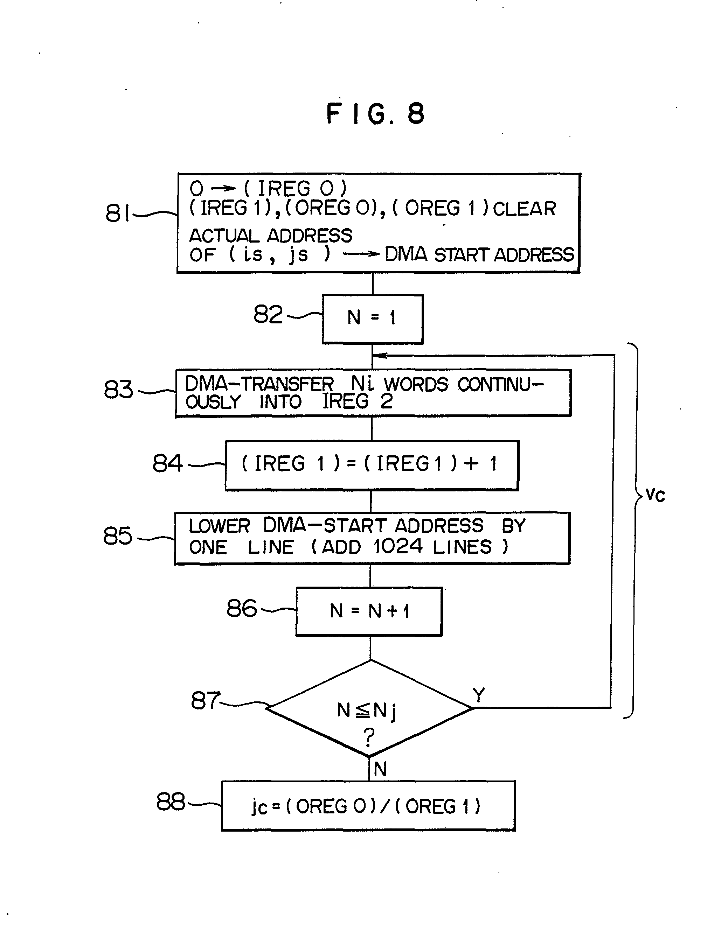

Fig. 8 is a flowchart for executing a procedure for obtaining the vertical barycenter $j_c$. First, in accordance with an instruction from the CPU 1, "0" is entered into the IREG-0 16, the IREG-1 19, the OREG-0 24 and the OREG-1 27 are cleared through the MPXs 18, 23 and 26 respectively, an actual address of ($i_s$, $j_s$) to be read out of the picture memory 6 so as to be transferred to the IREG-2 20 is made to be a DMA start address (in the step 81), and then $N = 1$ (in the step 82). Then, picture data are DMA-transferred to the IREG-2 20 by $N_i$ words in succession (in the step 83), and the contents of the IREG-1 19 is increased by one (in the step 84). The DMA start address is lowered by one line (in the step 85) and the value of N is increased by one (in the step 86). Judgement is made as to whether $N \leq N_j$ (in the step 87), and if the judgement proves that $N \leq N_j$, the operation is returned to the step 83. If the judgement proves that $N > N_j$, on the contrary, the DMA transfer is ended. Then, the operation is advanced to the step 88. In the step 88, the CPU 1 operates to divide the contents stored in the OREG-0 24 by the contents stored in the OREG-1 27 to thereby obtain the vertical barycenter $j_c$. Thus, the contents in the respective parentheses { } in the denominator as well as in the numerator of the foregoing expression (3) can be obtained by performing the DMA transfer operation once. The routine from the step 83 to the step 87 is represented by $v_c$ (ma, w, b, $l$), the definition of ma, w, b, and $l$ being the same as that as to the routine of $h_c$ (ma, w, b, $l$). The flowchart of Fig. 8 shows the case where $l = 1024$ similarly to the case of Fig. 7.

Next, description will be made as to the processing of the step 5 of Fig. 5, that is, the measurement of a pedestal level of the camera. An output of the camera 14 generated when a black object is picked up by the camera 14 is called a pedestal level. Ideally, it is desirable that the pedestal level is zero. Generally, however, the pedestal level has a value which is not zero. The pedestal level includes not only the brightness peculiar to a camera but also brightness in a non-luminance area on a scene of a display tube. In order to accurately obtain a position of a barycenter of the foregoing cross hatch pattern, it is necessary that the barycenter calculation is performed with respect to picture data from which this pedestal level is subtracted. Therefore, as shown in Fig. 5, the pedestal level of the camera 14 is measured prior to the barycenter calculation (in the step 7). The pedestal level measurement processing is executed also by the foregoing arithmetic circuit 4.

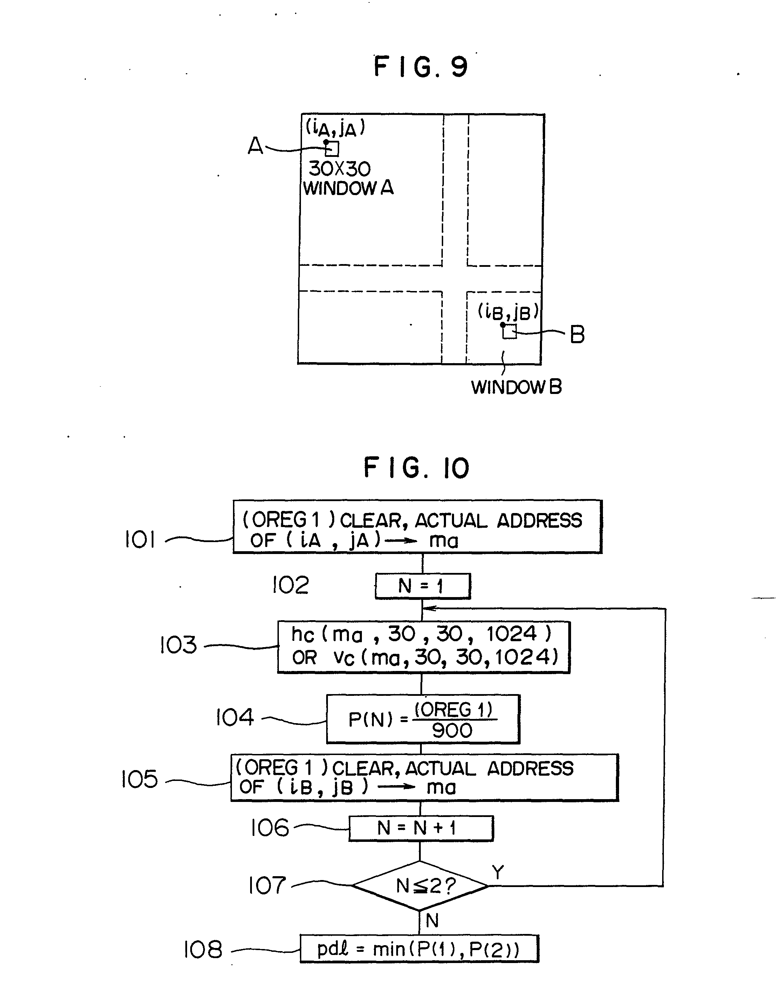

First, as shown in Fig. 9, processing windows A and B each having a size of about 30x30 picture elements are set at two positions, that is, at the left upper and right lower corners, of the enlarged close-up scene, and mean values $p(1)$ and $p(2)$ of brightness within the windows are obtained. The reason why the windows are set at those two positions, the left upper and right lower corners, is that in the case where a cross hatch signal is not always generated at the center of the scene, either one of the two windows may exclude the cross hatch signal even if things come to the worst, and this can be surely realized by properly setting the magnification of the optical system. That is, since there is a possibility that the cross hatch signal is included in either one of the two windows, the smaller one of the mean values $p(1)$ and $p(2)$ is selected as the pedestal level.

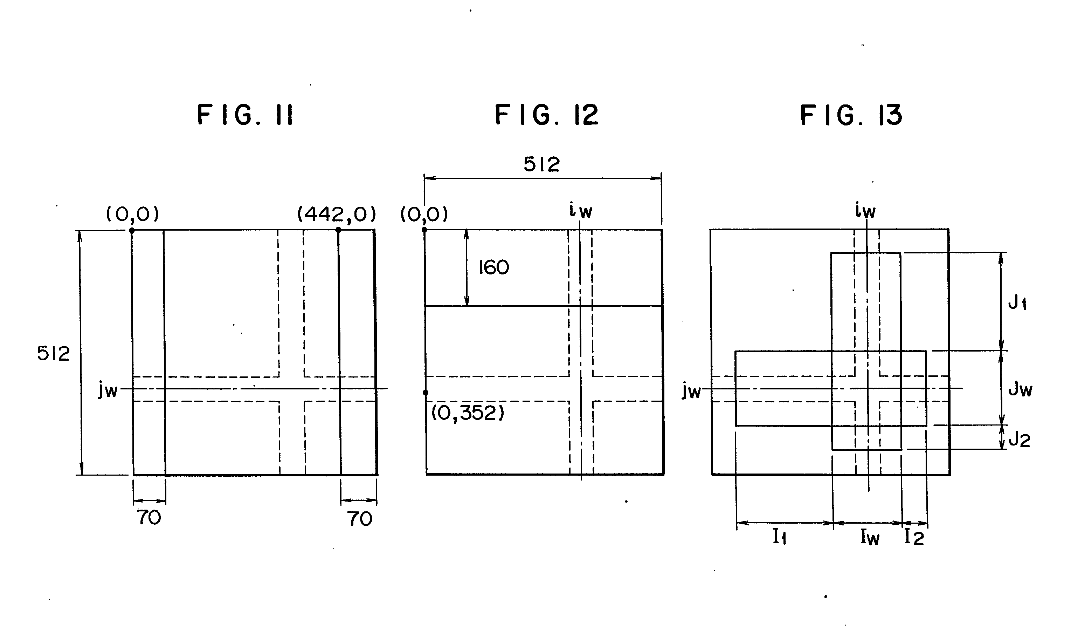

Fig. 10 is a flowchart for executing the measurement of the pedestal level. First, in accordance with the instruction from the CPU 1, the OREG-1 27 is cleared through the MPX 26, and an actual address of a point $(i_A, j_A)$ at the left upper corner in the window A to be read out of the picture memory 6 so as to be transferred to the IREG-2 20 is determined to be ma (in the step 101). Then, a variable N is set to "1" (in the step 102), and the routine $h_c$ (ma, 30, 30, 1024) or $v_c$ (ma, 30, 30, 1024) is executed (in the step 103). The CPU 1 operates to read out the contents in the OREG-1 27 to calculate the mean value $p(1)$ of the pedestal level of the window A, after DMA-transfer (in the step 104). This calculation is performed by dividing the total sum (the contents in the OREG-1 27) of brightness of all the picture elements in the window A by the number of all the picture elements, that is, 900, in the window A. Next, in accordance with the instructions from the CPU 1, the OREG-1 27 is cleared through the MPX 26, an actual address of a point $(i_B, j_B)$ at the left upper corner in the window B to be read out of the picture memory 6 is made to be ma (in the step 105), and the variable N is increased by one (in the step 106). The operation is returned from the step 107 to the step 103. The mean value $p(2)$ of the pedestal level of the window B is calculated in the steps 103 and 104, and, then the operation is advanced from the step 107 to the step 108. In the step 108, the smaller one of the mean values $p(1)$ and $p(2)$ is determined as the pedestal level.

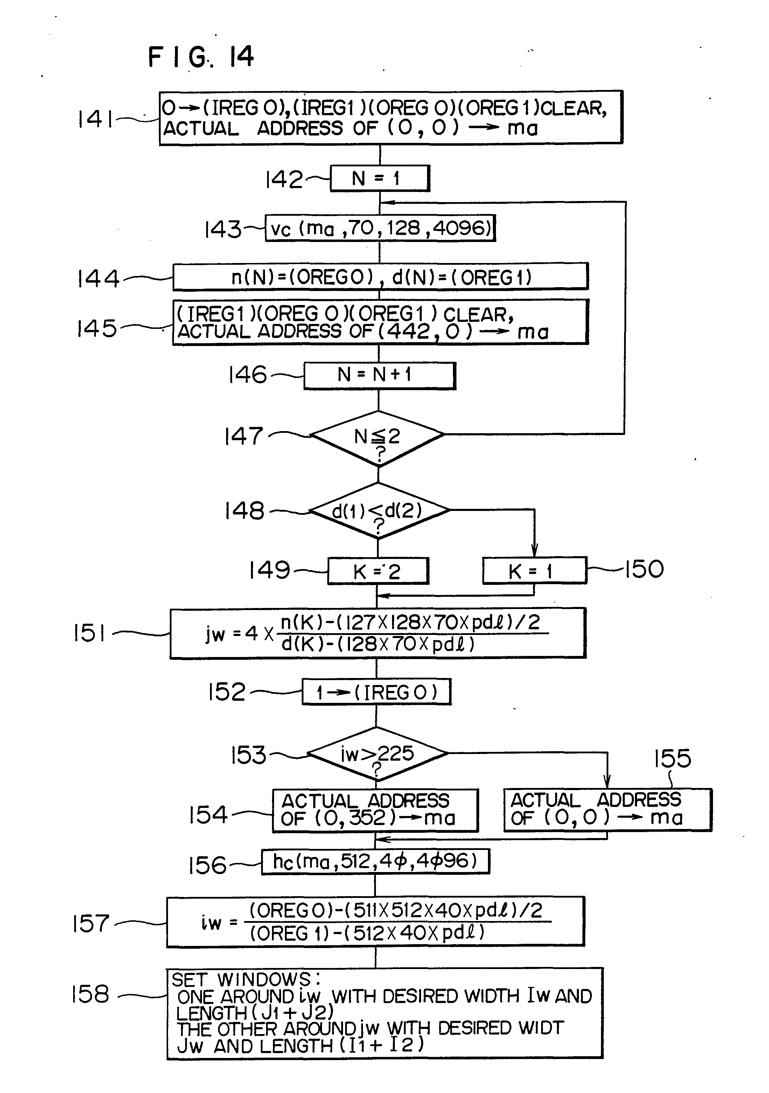

Next, referring to Figs. 11 through 14, description will be made as to the automatic setting of procesisng windows in the step 6 of Fig. 5. The system according to the present invention is featured in that positions of the vertical and horizontal barycenters of a cross hatch signal are obtained with rough accuracy and processing windows each having a width and a length which are determined in advance are set around the barycenter positions. The foregoing processing is performed with rough accuracy in order to shorten arithmetic processing time, that is, a vertical line is measured for every several lines. In this embodiment, description will be made as to the case where a vertical line is measured for every four lines to be DMA-transferred. First, as shown in Fig. 11, processing regions each having 70x128 picture elements are set at the left and right ends of the scene. Either one of the two regions, where the total sum of brightness of all the picture elements is smaller than that in the other region, that is, where no vertical cross hatch line is considered to be included, is selected, and a position of a vertical barycenter of the selected region is obtained as a center $j_W$ of the window. Referring to Fig. 14, the foregoing procedure will be described. First, in accordance with the instructions from the CPU 1, in the step 141 where data are read out of the picture memory 6 and transferred to the IREG-2 20, initialization is performed, and an actual address of a point (0, 0) at the left upper corner in the processing region at the left end of the scene is made to be ma. Then, N is set to 1 (in the step 142), and the routine $v_c$ (ma, 70, 128 (=512/4), 4096(=1024x4)) is executed using the arithmetic circuit 4 (in the step 143). A variable $n(N=1)$ is made to be the contents of the OREG-0 24 and a variable $d(N=1)$ is made to be the contents of the OREG-2 27 (in the step 144). The registers are initialized through the MPXs 23 and 26 (in the step 145), and an actual address of a point (442, 0) at the left upper corner in the processing region at the right end of the scene to be read out of the picture memory 6 is made to be ma, and N is increased by one (in the step 146). The operation is shifted from the step 147 to the step 143, and the routine $v_c$ (ma, 70, 128, 4096) is executed again. In accordance with the instructions from the CPU 1, the variable $n(N=2)$ is made to be the thus obtained contents of the OREG-0 24 and the variable $d(N=2)$ is made to be the thus obtained contents of the OREG-1 27 (in the step 144).

The operation is advanced from the step 147 to the step 148, and the CPU 1 compares the contents of the respective variables d(1) and d(2) with each other (in the step 148). If d(1) < d(2), K = 1 is established (in the step 150), and if d(1) ≥ d(2), on the contrary, K = 2 is established (in the step 149). That is, a value of N in one region where the total sum of brightness of all the picture elements is smaller than that of the other region is made to be K. The CPU 1 calculates the barycenter $j_w$ (in the step 151). When the barycenter $j_w$ is calculated by the CPU 1, in order to eliminate an influence of a pedestal level pdl, as shown in the following expression, a quantity of influence of the pedestal level stored in the program memory 3 is subtracted from both the denominator and numerator of the expression.

$$j_w = 4 \times \frac{n(K) - (127 \times 128 \times 70 \times pdl)/2}{d(K) - (128 \times 70 \times pdl)}$$

In the next processing, as shown in Fig. 12, a processing region having 512x40 picture elements is set at the upper or lower end of the scene so as to have no horizontal cross hatch line found in the step 151. That is, the CPU 1 judges whether the barycenter $j_w$ is positioned upper or lower than the center of the scene (in the step 153). If the judgement proves that the barycenter $j_w$ is positioned lower, the processing region is set at the upper end of the scene, and an actual address of a point (0, 0) in the picture memory 6 is made to be ma (in the step 155). If the judgement proves that the barycenter $j_w$ is positioned upper, on the contrary, the processing region is set at the lower end of the scene, and an actual address of a point (0, 352) in the picture memory 6 is made to be ma (in the step 154). Then, the routine $h_c$ (ma, 512, 40, 4096) is executed (in the step 157), and calculation is performed through the following expression (in the step 157), so that a position of the horizontal barycenter obtained by teh calculation in which an influence of the pedestal level is eliminated is determiend as the center $i_w$ of the window.

$$i_w = \frac{(OREG-0) - (411 \times 512 \times 40 \times pdl)/2}{(OREG-1) - (512 \times 40 \times pdl)}$$

Next, the operation is advanced to the step 158, as shown in Fig. 13, so that two windows each having a desirable width $l_w$ and a desirable length $J_1 + J_2$ are set around the barycenter $i_w$ for a vertical cross hatch line, and two windows each having a desirable width $J_w$ and a desirable length $l_1 + l_2$ are set around the barycenter $J_w$ for a horizontal cross hatch line. Although the windows are set in the order of $j_w$ and $i_w$ in this embodiment, the windows may be set in the order of $i_w$ and $j_w$.

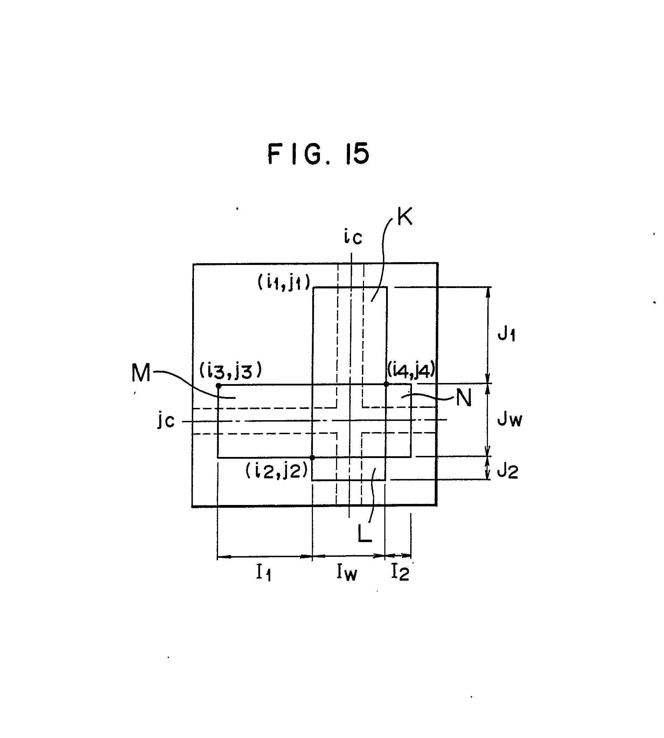

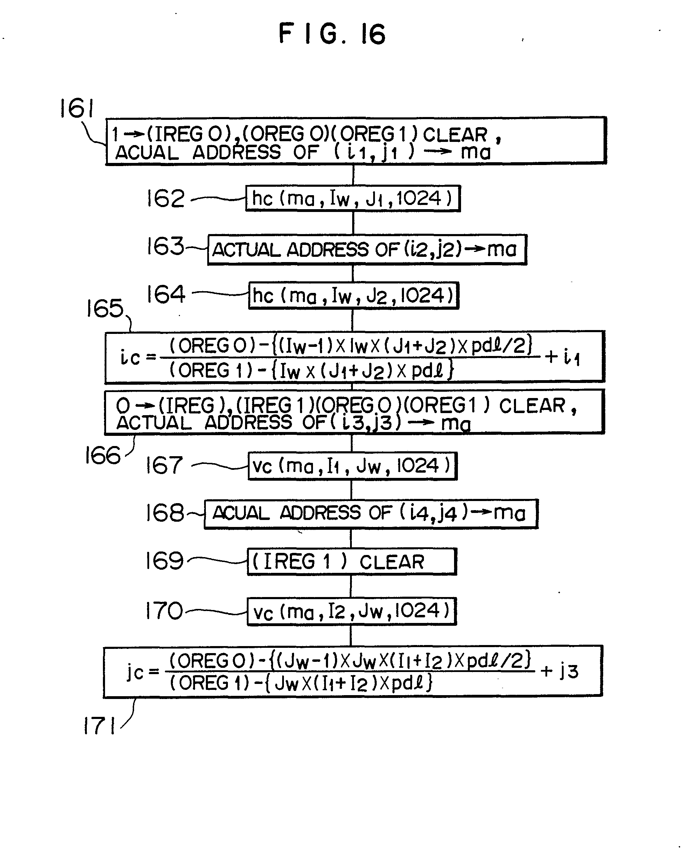

Next, referring to Figs. 15 and 16, description will be made as to the measurement operation of a barycenter position of a cross hatch signal in the step 7 of Fig. 5. Fig. 15 shows windows the same as those set in Fig. 13. In Fig. 15, picture addresses at the left upper corners of four divisional windows K, L, M and N are represented by $(i_1, j_1)$, $(i_2, j_2)$, $(i_3, j_3)$ and $(i_4, j_4)$ respectively, and a barycenter position of a cross hatch signal to be obtained is represented by $(i_c, j_c)$. The method of calculating the barycenter position $(i_c, j_c)$ is fundamentally the same as that of calculating the window center $(i_w, j_w)$, however, the former is different from the latter in that every vertical line is measured in order to improve accuracy in measurement.

As shown in Fig. 16, first, in accordance with the instructions from the CPU 1, the registers are initialized through the corresponding MPXs, and an actual address of a point $(i_1, j_1)$ at the left upper corner of the window K in the picture memory 6 is made to be ma (in the step 161). The routine $h_c$ (ma, $l_w$, $J_1$, 1024) for the window K is executed in the arithmetic circuit 4 (in the step 162). Next, the operation is advanced to the step 163 in which an actual address of a point $(i_2, j_2)$ at the left upper corner of the window L in the picture memory 6 is made to be ma. The routine $h_c$ (ma, $l_w$, $J_2$, 1024) for the window L is executed (in the step 164). Taking into consideration the pedestal level pdl stored in the program memory 3, the CPU 1 calculates the barycenter $i_c$ through the following expression (in the step 165).

$$i_c = \frac{(OREG-0) - \{(I_w - 1) \times I_w \times (J_1 + J_2) \times pdl/2\}}{(OREG-1) - \{I_w \times (J_1 + J_2) \times pdl\}} + i_1$$

Next, in accordance with the instructions from the CPU 1, the registers are initialized, and an actual address of a point $(i_3, j_3)$ at the left upper corner of the window M in the picture memory 6 is made to be ma (in the step 166). The routine $v_c$ (ma, $l_1$, $J_w$, 1024) for the window M is executed (in the step 167). Then, in accordance with the instructions from the CPU 1, an actual address of a point $(i_4, j_4)$ at the left upper corner of the window in the picture memory 6 is made to be ma (in the step 168), and the IREG-1 19 is cleared (in the step 169). The routine $v_c$ (ma, $I_2$, $J_w$, 1024) for the window N is executed (in the step 170). Finally, taking the pedestal level into consideration, the CPU 1 calculates the barycenter $j_c$ through the following expression.

$$j_c = \frac{(OREG-0) - \{(J_w - 1) \times J_w \times (I_1 + I_2) \times pdl/2\}}{(OREG -1) - \{J_w \times (I_1 + I_2) \times pdl\}} + j_3$$

The transfer of picture data from the picture memory 6 to the IREG-2 20 of the arithmetic circuit 4 is performed by the DMA controller 30. Thus, the transfer of picture data from the picture memory 6 to the arithmetic circuit 4 by the DMA controller 30 can be performed at a high speed comparison with the case where the picture data transfer is performed by the CPU 1.

As described above, the CPU 1 operates to calculate a misconvergence amount defined as H-R/G = RX-GX; H-B/G = BX-GX; V-R/G = RY-GY; and V-B/G = BY-GY, on the basis of the flowchart of Fig. 5 to thereby produce the thus obtained misconvergence amount to the CRT 9 or the printer 10. If necessary, the thus obtained misconvergence amount can be displayed on the monitor 13 through the picture input/output circuit 5.

Thus, in the foregoing embodiment, a large number of operations are executed with respect to picture data stored in the picture memory 6 by using the arithmetic circuit 4, and therefore the operations can be performed at a high speed with no deterioration of accuracy in measurement.

As described above, according to the present invention, the arithmetic circuit for calculating a barycenter of a picture at a high speed is provided, and therefore there are such advantages that a misconvergence amount can be measured at a high speed and with high accuracy and measurement of a misconvergence amount can be automatically performed.

## Claims

1. A misconvergence amount measuring apparatus comprising:

display means (15) for displaying a cross hatch pattern on a color display tube to be measured;

image pickup means (14) for enlarging a scene of said color display tube to be measured on which a cross hatch pattern is displayed by said display means and for picking up an image of the enlarged scene of said color display tube;

a picture input circuit (5) having an analog-to-digital conversion means for converting an image signal of the scene having the cross hatch pattern for every color picked up by said image pickup means into a digital image signal;

a picture memory (6) for storing picture data formed on the basis of the image signal for every color obtained from said picture input circuit;

a program memory (3) storing a program;

an arithmetic circuit (4) for taking in the picture data for every color from said picture memory so as to parallelly execute a cumulative arithmetic processing of the picture data and an inner product arithmetic processing between the picture data and a picture address;

calculation means (1) for designating a region where a supply is transferred in accordance with said program stored in said program memory from said picture memory to said arithmetic circuit to thereby set a first window, and for executing a calculation in said first window to divide a result of the inner product arithmetic processing between the picture data and the picture address obtained from said arithmetic circuit by a result of the cumulative arithmetic processing of the picture data obtained from said arithmetic circuit to thereby obtain a barycenter of the cross hatch pattern for every color, and for measuring a displacement of the obtained barycenter of the cross hatch pattern for every color to thereby measure an amount of misconvergence; and

a bus line (8) for connecting said picture input circuit, said picture memory, said program memory, said arithmetic circuit, and said calculation circuit to each other.

2. A misconvergence amount measuring apparatus according to Claim 1, in which said calculation circuit (1) includes a window setting means for setting a second window at an end portion of the scene stored in said picture memory so that the cumulative arithmetic processing of the picture data and the inner product arithmetic processing between the picture data and the picture address are executed within said second window by said arithmetic circuit so as to obtain barycenters with respect to vertical and horizontal lines of the cross hatch pattern to thereby set said first window on the basis of the obtained barycenters.

3. A misconvergence amount measuring apparatus according to Claims 1 or 2, which said calculation circuit (1) includes a pedestal, level measuring means for setting a third window at a corner portion of the scene stored in said picture memory so that the cumulative arithmetic processing of the picture data is executed within said third window by said arithmetic circuit (4) to thereby calculate brightness at a portion having no cross hatch pattern to measure a pedestal level.

4. A misconvergence amount measuring apparatus according to one of Claims 1 to 3, further comprising a DMA controller (3) for executing supply and transfer of the picture data from said picture memory (6) to said arithmetic circuit, separately from the calculating means.

# FIG. 1

0 247 627

# FIG. 2

14

15

13

SIGNAL
GENERATOR — 12

6          7          30

5 — PICTURE
I/O
CIRCUIT

PICTURE
IMAGE

GENERAL
PURPOSE
I/O
CIRCUIT

DMA
CON-
TROLLER

8

1 — CPU

FLOPPY
DISK
CON-
TROLLER

PROGRAM
MEMORY

ARITHMETIC
CIRCUIT

9          10          2          11          3          4

# F I G. 3

DMA  DATA  TRANSFER  CYCLE  TIME

```
STORE
PICTURE
DATA  INTO
IREG 2
```

INNER-PRODUCT OPERATION PROCESSING

$(OREG\ O)_{t-1} + (IREG\ 1)_t \cdot (IREG\ 2)_t$
$\longrightarrow (OREG\ O)_t$

CUMULATIVE  OPERATION  PROCESSING

$(OREG\ 1)_{t-1} + (IREG\ 2)_t$
$\longrightarrow (OREG\ 1)_t$

ADDRESS  OPERATION  PROCESSING

$(IREG\ 1)_{t-1} + (IREG\ O)$
$\longrightarrow (IREG)_t$

0 247 627

# FIG. 4

## 1) TAKE-IN OF CLOSE-UP SCENE OF DISPLAY

R, G, B MONOCHROMATIC CROSS-HATCH SIGNAL → R, G, B PICTURE MEMORY

## 2) AUTOMATIC WINDOW SETTING

☐ WINDOW FOR VERTICAL CROSS-HATCH LINE

┆ ┆ WINDOW FOR HORIZONTAL CROSS-HATCH LINE

## 3) AVERAGING OF DOT – BRIGHTNESS WITHIN WINDOWS

IN THE CASE OF VERTICAL CROSS-HATCH LINE

→ AVERAGE BRIGHTNESS IN THE $j$-DIRECTION

MEAN BRIGHTNESS $M(i)$

= $\Sigma$ BRIGHTNESS OF EACH PICTURE ELEMENT

## 4) CALCULATION OF BARYCENTER POSITION (MEAN LOAD VALUE) OF CROSS-HATCH LINE

$$\text{BARYCENTER POSITION } ic = \frac{\sum_i i \cdot M(i)}{\sum_i M(i)}$$

DISPLACEMENT $d$ BETWEEN RESPECTIVE BARYCENTER POSITIONS OF R, G, B

$\underline{d}$ AMOUNT OF MISCONVERGENCE

0 247 627

FIG. 5

```
OUTPUT R CROSS-HATCH SIGNAL ───1

            C = G ───2

            TAKE IN PICTURE ───3

    OUTPUT CROSS-HATCH SIGNAL
    CORRES PONDING C ───4

    MEASURE PEDESTAL LEVEL OF CAMERA ───5

    AUTOMATICALLY SET PROCESSING WINDOW ───6

    MEASURE BARYCENTER (ic, jc)
    OF CROSS-HATCH SIGNAL ───7

8 ─< C = G >─── Y
       │ N

12 ─< C = B >─ Y        13              9
       │ N

15  BX = ic      GX = ic        RX = ic
    BY = jc      GY = jc        RY = jc

16  C = E        C = R ───14     C = B ───10

        N ─< C = E >─── 11

    CULCULATE AMOUNT OF
    MISCONVERGENCE
        H-R/G = RX - GX
        H-B/G = BX - GX
        V-R/G = RY - GY
        V-B/G = BY - GY      ───17
```

# F I G. 6

# F I G. 7

71 — 
```
1 → ( IREG 0 )
( OREG ), ( OREG 1 ) CLEAR

ACTUAL ADDRESS → DMA START
OF ( is, js )        ADDRESS
```

72 — N = 1

73 — ( IREG 1 ) CLEAR

74 — DMA-TRANSFER Ni WORDS CONTINUOUSLY TO IREG 2

75 — LOWER DMA-START ADDRESS BY ONE LINE ( ADD 1024 LINES )

76 — N = N + 1

77 — N ≤ Nj     Y

N

78 — $ic$ = ( OREG 0 ) / ( OREG 1 )

hc

# FIG. 8

81 — $\boxed{\begin{array}{l} 0 \rightarrow (\text{IREG 0}) \\ (\text{IREG 1}),(\text{OREG 0}),(\text{OREG 1}) \text{ CLEAR} \\ \text{ACTUAL ADDRESS} \\ \text{OF } (is, js) \longrightarrow \text{DMA START ADDRESS} \end{array}}$

82 — $\boxed{N = 1}$

83 — $\boxed{\begin{array}{l}\text{DMA-TRANSFER } Ni \text{ WORDS CONTINU-} \\ \text{OUSLY INTO IREG 2}\end{array}}$

84 — $\boxed{(\text{IREG 1}) = (\text{IREG 1}) + 1}$

85 — $\boxed{\begin{array}{l}\text{LOWER DMA-START ADDRESS BY} \\ \text{ONE LINE (ADD 1024 LINES)}\end{array}}$

86 — $\boxed{N = N + 1}$

87 — $N \leqq Nj\ ?$   Y

Vc

N

88 — $\boxed{jc = (\text{OREG 0}) / (\text{OREG 1})}$

# F I G. 9

# F I G. 10

101 — (OREG 1) CLEAR, ACTUAL ADDRESS OF ($i_A$, $j_A$) ⟶ ma

102 — N = 1

103 — hc (ma, 30, 30, 1024) OR vc (ma, 30, 30, 1024)

104 — $P(N) = \dfrac{(OREG\ 1)}{900}$

105 — (OREG 1) CLEAR, ACTUAL ADDRESS OF ($i_B$, $j_B$) ⟶ ma

106 — N = N + 1

107 — N ≤ 2?

108 — pdℓ = min (P(1), P(2))

# FIG. 11

(0,0)          (442,0)

512

jw

70          70

# FIG. 12

512

(0,0)          iw

160

(0,352)

# FIG. 13

iw

J1

jw          Jw

J2

I1   Iw   I2

0 247 627

## F I G. 14

141 — O → (IREG 0), (IREG1) (OREG 0)(OREG 1) CLEAR, ACTUAL ADDRESS OF (O , O) → ma

142 — N = 1

143 — vc (ma ,70 ,128 ,4096)

144 — n(N) = (OREG O) , d(N) = (OREG 1)

145 — (IREG1)(OREG O)(OREG1) CLEAR, ACTUAL ADDRESS OF (442 , O) → ma

146 — N = N + 1

147 — N ≦ 2 ?

148 — d(1) ≦ d(2) ?

149 — K = 2          K = 1 — 150

$$jw = 4 \times \frac{n(K) - (127 \times 128 \times 70 \times pd\ell)/2}{d(K) - (128 \times 70 \times pd\ell)}$$

152 — 1 → (IREG O)

153 — jw > 225 ?          155

154 — ACTUAL ADDRESS OF (O , 352) → ma          ACTUAL ADDRESS OF (O , O) → ma

156 — hc (ma ,512 ,4φ ,4φ96)

$$iw = \frac{(OREG O) - (511 \times 512 \times 40 \times pd\ell)/2}{(OREG 1) - (512 \times 40 \times pd\ell)}$$

158 — SET WINDOWS :
ONE AROUND iw WITH DESIRED WIDTH Iw AND LENGTH (J1 + J2)
THE OTHER AROUND jw WITH DESIRED WIDT Jw AND LENGTH (I1 + I2)

## F I G. 15

# F I G. 16

**161** 1 → (IREG O),(OREG O)(OREG 1) CLEAR ,
ACUAL  ADDRESS  OF ( $i_1, j_1$ ) → ma

**162** hc (ma, Iw, $J_1$, 1024)

**163** ACTUAL ADDRESS OF ($i_2, j_2$) → ma

**164** hc (ma, Iw, $J_2$, 1024)

**165**
$$i_c = \frac{(OREG\ O) - \{(Iw-1) \times Iw \times (J_1+J_2) \times pd\ell/2\}}{(OREG\ 1) - \{Iw \times (J_1+J_2) \times pd\ell\}} + i_1$$

O → (IREG ),(IREG 1)(OREG O)(OREG 1) CLEAR ,
ACTUAL  ADDRESS  OF( $i_3, j_3$) → ma

**166**

**167** vc (ma, $I_1$, Jw, 1024)

**168** ACUAL  ADDRESS  OF ( $i_4, j_4$) → ma

**169** ( IREG 1 )  CLEAR

**170** vc (ma, $I_2$, Jw, 1024)

$$j_c = \frac{(OREG\ O) - \{(Jw-1) \times Jw \times (I_1+I_2) \times pd\ell/2\}}{(OREG\ 1) - \{Jw \times (I_1+I_2) \times pd\ell\}} + j_3$$

**171**